## Europäisches Patentamt
## European Patent Office
## Office européen des brevets

(19)

(11) Numéro de publication: **0 021 438**
**B1**

(12) **FASCICULE DE BREVET EUROPEEN**

(45) Date of publication of patent specification: **06.04.83**

(51) Int. Cl.³: **B 29 C 25/00, B 29 C 17/02**

(21) Application number: **80103647.6**

(22) Date of filing: **27.06.80**

(54) Method of manufacturing shrinkable sleeves from cross-linking plastics material.

(30) Priority: **29.06.79 FI 792065**

(43) Date of publication of application:
**07.01.81 Bulletin 81/1**

(45) Publication of the grant of the patent:
**06.04.83 Bulletin 83/14**

(84) Designated Contracting States:
**AT BE CH DE FR GB IT LI LU NL SE**

(56) References cited:
**DE - A - 2 719 308**
**FR - A - 1 441 623**
**FR - A - 2 060 826**
**GB - A - 1 046 367**
**US - A - 3 086 242**
**US - A - 3 448 182**
**US - A - 3 526 683**

(73) Proprietor: **OY WIIK & HÖGLUND AB**
**Kyrkoesplanaden 22 B**
**SF-65100 Vasa 10 (FI)**

(72) Inventor: **Blomqvist, Harald Vilhelm**
**Wolffskavägen 19**
**SF-65200 Vasa 20 (FI)**

(74) Representative: **Brandes, Jürgen, Dipl.-Chem. Dr.**
**Thierschstrasse 8**
**D-8000 München 22 (DE)**

Courier Press, Leamington Spa, England.

Method of manufacturing shrinkable sleeves from cross-linking plastics material

This invention relates to a method of manufacturing heat-shrinkable sleeves from a cross-linking plastics material.

The manufacture of heat-shrinkable sleeves from a cross-linking plastics material is known per se. Such sleeves are used i.a. for the sealing of joints on coated cables, tube joints and the like. The sleeve is manufactured, for example, by extruding of a plastics material that can be cross-linked. The sleeve then has to be extruded at a temperature below the cross-linking temperature. The finished sleeve has substantially its extruded dimensions. On the final site of use, the sleeve is placed over the joint to be sealed and heated with a burner or a hot-air blower to the cross-linking temperature of the plastics material, whereby the sleeve shrinks due to the cross-linking reaction of the plastics material. The cross-linking reaction can also be effected with high-energy irradiation.

As a raw material for said sleeves for example polymer plastics that can be cross-linked with the help of peroxides, such as polyethylene, chlorinated polyethylene, chlorosulphonated polyethylene, ethylenepropylene copolymer, plasticized polyvinyl chloride can be used. The known shrinkable sleeves are suitable for most applications, even though they have their restrictions. Firstly, the degree of shrinkage due to the cross-linking reaction is not sufficient, for example for such applications where the joint to be sealed is formed by two cables or tubes of different diameters, or possibly of two parallel wires or tubes. Furthermore, many of the cross-linking plastics materials, which can come into question, have a high cross-linking temperature, being of the order of 140 to 180°C which also restricts the possibilities of heating the joints. Also many plastics melt partly or at least soften considerably at their cross-linking temperatures thus exhibiting a very poor capacity for retaining their shape and giving an uneven sealing effect. The heating can also damage the pipes or the cables to be sealed. Additionally, energy irradiation is not a very effective cross-linking method for tubes having a larger wall thickness as the energy irradiation can penetrate the sleeve wall to a depth of only about 0.5 to 0.6 mm. These sleeves also shrink in their longitudinal direction, which can lead to an insufficient sealing effect in the joint.

In order to eliminate the problems associated with the high cross-linking temperature and the longitudinal shrinking, it has according to the US patent specification 3 086 242 been suggested a method for the manufacture of heat-shrinkable tubular articles, according to which method a tubular material extruded from a cross-linking plastics material is heated to a temperature above its cross-linking temperature, whereby the cross-linking of the plastics material takes place. Thereafter the tubular material is cooled and simultaneously expanded in its radial direction, whereby the material, when cooled to ambient temperature is retained in its expanded state. The expanded state can then be unlocked by reheating the tube, the tube thereby returning substantially to its extruded shape. During the said reheating stage the tube does not have to be heated to as high a temperature as during the cross-linking reaction, the disadvantages connected with the heating thus being substantially eliminated. It is also possible to expand the tube to a diameter being 4 to 8 times the extruded diameter whereby a correspondingly higher degree of shrinkage is obtained as compared to that obtained during only cross-linking.

The above methods, however, have their drawbacks. On the one hand it is difficult to control that the tube retains its shape at the cross-linking temperature, at which the tube changes into substantially plasticized state, and on the other hand the cross-linked tube is expanded in the process by blowing air into the tube at a suitable pressure whereby the tube is expanded to a degree corresponding to the pressure. There is then however the risk that the expansion takes place unevenly and in an uncontrolled manner at different areas in the tube sidewall, which causes irregularities in the sidewall thickness of the final expanded product. A natural consequence of this is that the tube, during heating, shrinks unevenly whereby the joint will not be sealed tightly enough.

These problems relating to the shape stability and uneven expansion are eliminated according to the invention so that the sleeve piece, which has been extruded at a temperature below its cross-linking temperature, is cut into lengths corresponding substantially to the length of the finished sleeve or a multiple thereof, that the cut sleeve piece is heated to at least the cross-linking temperature of the plastics material while being in a fixed position both on its exterior and interior side, and that the substantially cross-linked sleeve piece is expanded during simultaneous cooling to the desired sleeve diameter around two or more rotating, parallel rolls, which can be moved away from each other.

In the method according to the invention the cut sleeve pieces from the extruder may be fixed during the heating in the space between two coaxial tubes, which tube assembly is lowered into a heated medium, for example an oil bath, the temperature of which is somewhat over the cross-linking temperature. Thereby the sleeve dose not lose its shape and its wall thickness does not change at any point when the material is plasticized during the heating. When the plastics material has been cross-linked, the sleeve pieces may be removed from the retaining means as the cross-linking has changed the physical properties of the plastics material in such a way that the sleeve can be moved also at the temperature of the bath without any flowing taking place in its walls which could give rise to changes in thickness.

Another possibility to retain the shape of the cut sleeve piece during the cross-linking heating stage in the oil bath is to place the sleeve piece into a hollow cylinder having an inner diameter equivalent to the outer diameter of the sleeve piece and to close the cylinder ends, whereby the sleeve piece can be held by a slight internal overpressure against the inner surface of the cylinder wall. The internal pressure can advantageously be achieved by means of the heating oil injected into the retaining cylinders.

The subsequent step in the method according to the invention is cooling and simultaneous expansion, which should be performed so that the expansion takes place evenly at all points in the sidewall of the sleeve. This expansion stage is carried out according to the invention by the threading of the sleeve piece removed from the retaining means in the bath onto two or more parallel rolls so that the rolls will be contained within the loop formed by the sleeve. All these rolls must be operated at the same peripheral speed. The rolls must also be movable away from each other in order to expand the sleeve loop. In order to ensure that the expansion takes place uniformly it is advantageous to provide the roll surface with rills or grooves or to make it coarse in some other way. The rolls are preferably cooled in order to speed up the process. The sleeve piece rotates during this expansion stage more or less like a stretched ribbon around the rotating rolls and is expanded when the rolls are moved away from each other and cooled to a temperature at which the expanded state is stable. This rotating movement around the rolls guarantees that the sleeve wall is not expanded unevenly, whereby a homogeneous sleeve is obtained. The sleeve is expanded at this stage in a radial direction to obtain the desired diameter.

When the finished sleeve has been placed over a joint or the like to be sealed, the sleeve is heated to such an elevated temperature at which the expanded state of the plastic is unlocked and the sleeve returns substantially to the state prevailing before the expansion. A method according to the invention is described in more detail in the following Example.

### Example

From polyethylene to which has been added about 2.0% by weight of dicumyl peroxide as a cross-linking agent for the polyethylene, is extruded in an extruder provided with a cooler a tube having a diameter of 100 mm, and a wall thickness of about 2.2 mm. The tube is cut into sleeve pieces having a length of about 700 mm which are placed in the space between two coaxial tubes, the space substantially corresponding to the thickness of the sleeve wall. The tubes and the interposed sleeve pieces are lowered for about 6 minutes into an oil bath, the temperature of which is about 180°C. After said time period the sleeve pieces are removed from the space between the two retaining tubes and placed on two expansion rolls. The rolls are provided with built-in water cooling and their temperature is about 50 to 60°C. The rolls are driven and can be moved away from each other. By means of the rotating rolls the sleeve is expanded in a radial direction about 60% during a time period of about 1-1/2 minutes during which time the temperature of the sleeve has fallen to about 80°C. The sleeve piece is cut into final sleeve length, is removed, and further cooled and cleaned from attached oil, and the sleeve is ready for use. When the sleeve is heated to a temperature of about 130°C it shrinks to a diameter of about 100.5 mm. No shrinkage in the longitudinal direction takes place.

As is known, the degree of cross-linking is dependant on the temperature and may vary even for the same plastics material within a fairly wide range. If the reaction temperature is lowered, naturally the reaction time has to be prolonged correspondingly.

### Claims

1. Method of manufacturing heat-shrinkable sleeves from a cross-linking plastics material, by extruding a sleeve piece at a temperature below the cross-linking temperature of the plastics material, by heating the sleeve piece to at least the cross-linking temperature, and thereafter expanding and simultaneously cooling the sleeve piece to the desired diameter, characterized in that the extruded sleeve piece is cut into lengths corresponding substantially to the length of the finished sleeve or a multiple thereof, that the cut sleeve piece is heated to the cross-linking temperature of the plastics material while fixed both at its exterior and interior side, and that the cross-linked sleeve piece is expanded during simultaneous cooling to the desired sleeve diameter around two or more rotating parallel rolls which are moved away from each other.

2. Method according to Claim 1, characterized in that the sleeve piece during heating is retained in the space between two coaxial tubes of different diameter.

3. Method according to Claim 2, characterized in that the expansion rolls are cooled during the expansion stage of the sleeve piece.

4. Method according to Claim 1, characterized in that the expansion rolls are rotated at the same peripheral speed.

5. Method according to any one of the Claims 1 to 4, characterized in that the jacket surface of the expansion rolls are provided with rills, grooves or are worked in some other way to increase the surface friction.

6. Method according to Claim 1, characterized in that the sleeve is cut to its final length after the expansion stage.

**Patentansprüche**

1. Verfahren zum Herstellen heißschrumpfbarer Muffen aus einem vernetzten Kunststoff durch Extrudieren eines Muffenstücks bei einer unterhalb der Vernetzungstemperatur des Kunststoffs liegenden Temperatur, durch Erhitzen des Muffenstücks auf zumindest die Vernetzungstemperatur und durch anschließendes Aufweiten und gleichzeitiges Kühlen des Muffenstücks auf den gewünschten Durchmesser, dadurch gekennzeichnet, daß das extrudierte Muffenstück auf eine Länge geschnitten wird, die im wesentlichen der Länge der fertigen Muffe oder eines Vielfachen davon entspricht, daß die geschnittenen Muffenstück auf die Vernetzungstemperatur des Kunststoffs erhitzt werden, während sie sowohl an ihrer Außenseite als auch ihrer Innenseite festgehalten sind, und daß das vernetzte Muffenstück bei gleichzeitiger Kühlung auf den gewünschten Muffendurchmesser rings um zwei oder mehr zueinander parallele, sich drehende Walzen aufgeweitet wird, die voneinander weg bewegt werden.

2. Verfahren nach Anspruch 1, dadurch gekennzeichnet, daß das Muffenstück während des Erhitzens im Zwischenraum zwischen zwei koaxialen Rohren verschiedenen Durchmessers gehalten wird.

3. Verfahren nach Anspruch 2, dadurch gekennzeichnet, daß die Aufweitwalzen während des Aufweitvorgangs des Muffenstücks gekühlt werden.

4. Verfahren nach Anspruch 1, dadurch gekennzeichnet, daß die Aufweitwalzen mit der gleichen Umfangsgeschwindigkeit gedreht werden.

5. Verfahren nach einem der Ansprüch 1 bis 4, dadurch gekennzeichnet, daß die Mantelflächen der Aufweitwalzen mit Rillen versehen, mit Nuten versehen oder auf irgend eine andere Weise bearbeitet sind, um die Oberflächenreibung zu erhöhen.

6. Verfahren nach Anspruch 1, dadurch gekennzeichnet, daß die Muffe nach dem Aufweitvorgang auf ihre endgültige Länge geschnitten wird.

**Revendications**

1. Procédé pour fabriquer des manchons thermorétractables en matière plastique réticulable, par extrusion d'un manchon à une température inférieure à la température de réticulation de la matière plastique, par chauffage du manchon à au moins la température de réticulation et ensuite par expansion et refroidissement simultané du manchon au diamètre désiré, caractérisé en ce qu'on coupe le manchon extrudé en tronçons correspondants substantiellement à la longueur du manchon fini ou à un multiple de celle-ci, en ce qu'on chauffe le manchon coupé à la température de réticulation de la matière plastique alors qu'il est supporté du côté extérieur ainsi que du côté intérieur et en ce que le manchon réticulé est expansé, pendant le refroidissement simultané, jusqu'au diamètre de manchon désiré, autour de deux ou plusieurs rouleaux parallèles tournants qui s'écartent l'un de l'autre.

2. Procédé suivant la revendication 1, caractérisé en ce que le manchon est retenu, pendant le chauffage, dans l'espace compris entre deux tubes coaxiaux de diamètre différent.

3. Procédé suivant la revendication 2, caractérisé en ce que les rouleaux d'expansion sont refroidis pendant l'étape d'expansion du manchon.

4. Procédé suivant la revendication 1, caractérisé en ce que les rouleaux d'expansion tournent à la même vitesse périphérique.

5. Procédé suivant l'une quelconque des revendications 1 à 4 caractérisé en ce que la surface enveloppante des rouleaux d'expansion comporte des stries, des rainures ou est usinée d'une autre manière pour accroître le frottement sur la surface.

6. Procédé suivant la revendication 1, caractérisé en ce que le manchon est coupé à sa dimension finale après l'étape d'expansion.